# EUROPÄISCHE PATENTSCHRIFT

(11) **EP 2 789 740 B1**
(45) Veröffentlichungstag und Bekanntmachung des Hinweises auf die Patenterteilung: **29.11.2017**
(21) Anmeldenummer: 13163559.1
(22) Anmeldetag: 12.04.2013
(51) Int. Cl.: E01C 19/28, E01C 19/48

(54) **Untergrundtemperaturmessung mittels eines Straßenfertigers**
Base temperature measurement by means of a road finisher
Mesure de la température du sous-sol au moyen d'une finisseuse de route

(43) Veröffentlichungstag der Anmeldung: 15.10.2014
(73) Patentinhaber: Joseph Vögele AG, 67067 Ludwigshafen (DE)
(72) Erfinder: BUSCHMANN,Martin, 67435 Neustadt (DE); GOTTERBARM, Tobias, 67117 Limburgerhof (DE); RUTZ, Arnold, 67065 Ludwigshafen (DE)
(74) Vertreter: Grünecker Patent- und Rechtsanwälte PartG mbB

(56) Entgegenhaltungen:
- EP-A1- 2 366 830
- DE-A1-102008 058 481
- DE-U1-202009 016 129
- US-A1- 2006 045 620
- US-A1- 2008 259 730
- US-B1- 6 749 364
- JOCHEN WENDEBAUM: "Nutzung der Kerntemperaturvorhersage zur Verdichtung von Asphaltmischgut im Strassenbau", DISSERTATION UNIVERSITÄT FRIDERICIANA ZU KARLSRUHE (TH),, 27. Juli 2004 (2004-07-27), Seiten 1-112, XP007921250,

## Beschreibung

Die vorliegende Erfindung betrifft einen Straßenfertiger mit den Merkmalen gemäß dem Anspruch 1. Weiterhin betrifft die Erfindung ein Verfahren zum Bestimmen eines Walzschemas eines Verdichterfahrzeuges mit den Merkmalen des Anspruchs 11. Aus der Dissertation von Dipl. Ing. Jochen Wendebaum: "Nutzung der Kerntemperaturvorhersage zur Verdichtung von Asphaltmischgut im Straßenbau, Dissertation Universität Fridericiana zu Karlsruhe (TH), 27. Juli 2004, Seiten 1 bis 112, geht hervor, dass an einem Straßenfertiger Prozessdaten erfassbar sind, einschließlich der Schichtdicke, der Materialtemperatur beim Einbau, der Windgeschwindigkeit, der Umgebungstemperatur und der Temperatur des Untergrunds, und an ein hinterherfahrendes Verdichterfahrzug versendet werden können, um darauf mittels eines Berechnungsmodels die Kerntemperatur der neu verbauten Straßenbelagschicht vorherzusagen, worauf basierend das Verdichterfahrzeug den Verdichtungsvorgang entsprechend anpassen kann.
Aus der US 6,749,364 B1 ist ein Straßenfertiger mit einer Wärmebildkamera bekannt. Die Wärmebildkamera ist auf eine neu eingebaute Asphaltschicht hinter der Einbaubohle gerichtet. Die Wärmebildkamera ist mit einer Steuereinheit gekoppelt, die die thermographischen Daten der Wärmebildkamera mit Positionsdaten verrechnet. Die georeferenzierten Daten können von der Steuereinheit abgespeichert werden, und ggf. über eine Telematikeinheit an andere Straßenfertigerfahrzeuge, bzw. Verdichterfahrzeuge versendet werden, sodass diese basierend auf den georeferenzierten Messdaten ihre jeweiligen Einbauparameter angleichen können. Die DE 20 2009 016 129 U1 offenbart eine Vorrichtung zur Temperaturmessung der Oberfläche von heißem Asphalt. Die Vorrichtung umfasst ein Gehäuse, in welchem ein Infrarottemperaturmesskopf beweglich angeordnet ist. Dieser wird mittels eines Motors hin- und herbewegt. Dafür ist eine aufwendige Lagerung notwendig, die regelmäßig geschmiert werden muss.
Aus der DE 10 2008 058 481 A1 ist ein Asphaltierungssystem und Asphaltierungsverfahren bekannt, um einen Plan zum Asphaltieren eins Arbeitsbereiches aufzustellen, der auf einem Positionstemperaturmodel basiert. Dabei wird ein Straßenfertiger mit einem Temperatursensor zum Erfassen von Temperaturdaten einer Einbauschicht hinter der Einbaubohle sowie mit einem Empfänger zum Erfassen von Positionsdaten offenbart. Den Temperatursensor bildet bspw. eine Infrarotkamera. Vorzugsweise ist der Temperatursensor an der Einbaubohle des Straßenfertigers befestigt und auf die neu verlegte Einbauschicht hinter der Einbaubohle gerichtet. Weiterhin umfasst der Straßenfertiger eine Anzeigevorrichtung, auf welcher die Temperaturdaten sowie die Positionsdaten dem Bediener des Straßenfertigers anzeigbar sind. Die Temperaturdaten sowie die Positionsdaten können über einen Sender an nachfolgende Verdichterfahrzeuge weitergegeben werden, sodass diese ihre Verdichtungsparameter entsprechend einstellen. Um die Temperaturdaten sowie die Maschinenpositionsdaten aufzunehmen, könnte gemäß einer spezifischen Ausführungsform eine unbemannte Drohne zum Einsatz kommen, die über die neu verlegte Asphaltdecke oder in der Nähe der Asphaltdecke fährt.
Bei den optischen Erfassungssystemen der US 6,749,364 B1 und DE 10 2008 058 481 A1 werden jeweils Temperaturdaten eines Bereichs der neu verlegten Einbauschicht hinter der Einbaubohle erfasst und als Basis zur Bestimmung eines Verdichtungsschemas für nachfolgende Verdichterfahrzeuge verwendet. Dafür werden die Messinstrumente zum Erfassen der Temperatur in der Nähe der Einbaubohle bzw. auf der Einbaubohle befestigt. Dort sind die Messinstrumente allerdings einer erhöhten Hitzebelastung ausgesetzt und können auch bei der Aufzeichnung ihrer Messergebnisse durch aufsteigende Aerosole oder Dämpfe bei der Datenerfassung gestört werden. Außerdem ist es schwierig, die Messinstrumente so relativ zur Einbaubohle anzuordnen, dass sie durch eine Nivellierbewegung der Einbaubohle nicht bei der Messdatenerfassung gestört werden. Auch kann es sein, dass die Messinstrumente, die nach hinten auf einen Bereich der Einbauschicht gerichtet sind, mit anderen Messsystemen, bspw. zur Schichtdickenberechnung, funktional in Konflikt geraten. Es kann jedoch sein, dass das nach hinten gerichtete Temperaturmesssystem Störungen im Schichtdickenmesssystem, bzw. anders herum hervorruft.
Es ist nun die Aufgabe der vorliegenden Erfindung, einen Straßenfertiger mit einfachen konstruktiven Mitteln dahingehend zu verbessern, dass die o.g. Nachteile des Standes der Technik umgangen werden können. Ebenfalls liegt der Erfindung die Aufgabe zugrunde, ein Verfahren zur Bestimmung eins Walzschemas ohne die o.g. Nachteile des Standes der Technik zur Verfügung zu stellen.
Diese Aufgabe wird gelöst mit den Merkmalen des Anspruchs 1 bzw. mit den Merkmalen des Anspruchs 11. Verbesserte Weiterbildungen der Erfindung sind durch die Merkmale der Unteransprüche gegeben.
Die vorliegende Erfindung betrifft einen Straßenfertiger, der eine Einbaubohle zum Verlegen einer Einbauschicht auf einem Untergrund sowie mindestens einen Temperatursensor umfasst. Erfindungsgemäß ist der Temperatursensor derart am Straßenfertiger befestigt und auf den Untergrund ausgerichtet, dass er eine Temperatur mindestens eines Bereichs des Untergrunds erfassen kann, der in Fahrtrichtung gesehen vor der Einbaubohle liegt.

Als Fahrtrichtung ist dabei die Einbaufahrtrichtung gemeint, in die der Straßenfertiger während des Verbaus einer neuen Einbauschicht fährt. Bei dem erfindungsgemäßen Straßenfertiger erfasst der Temperatursensor also nicht wie beim Stand der Technik die Temperatur eines Bereichs der neu verbauten Einbauschicht, sondern die Temperatur eines Bereichs des Untergrunds (Planum) vor der Einbaubohle, wo noch keine neue Einbauschicht verlegt worden ist. Die Einbauschicht kann bspw. eine Asphaltschicht sein, wie sie bekannterweise im Straßenbau zum Einsatz kommt.

Unter anderem bietet die Erfindung den Vorteil, dass die Temperaturdatenerfassung mittels des Temperatursensors unabhängig von einer Bewegung der Einbaubohle ist. Vorteilhaft ist auch, dass das Messergebnis des Temperatursensors nicht durch aufsteigende Aerosole oder Dämpfe der frisch verbauten Einbauschicht gestört werden. Vom Untergrund, von dem die Temperatur erfasst wird, steigen nämlich keine Aerosole auf. Diese steigen nämlich insbesondere im Bereich der frisch verbauten Einbauschicht auf. Außerdem bietet der Straßenfertiger zahlreiche Befestigungsmöglichkeiten für den Temperatursensor, sodass dieser auf den Untergrund vor der Einbaubohle ausgerichtet sein kann. Ebenso kann bei der Erfindung der Temperatursensor so an einem Ort des Straßenfertigers befestigt werden, dass er wenig Hitze durch den Verbau der Einbauschicht ausgesetzt ist. Schließlich lassen sich die Temperaturmessdaten von einem Untergrundbereich vor der Einbaubohle hervorragend vom Straßenfertiger selbst dazu verwenden, Einbauparameter entsprechend anzupassen, wobei sich bspw. die Leistung der Einbaubohlenheizung entsprechend der Untergrundtemperatur regeln lässt. Dies führt zu einer qualitativ verbesserten Einbauschicht.

Das Erfassen der Untergrundtemperatur bietet dem Fertigerfahrer eine einfache Arbeitshilfe zu entscheiden, ob der Verbau einer neuen Einbauschicht begonnen, fortgesetzt oder abgebrochen werden sollte, je nach Höhe der Untergrundtemperatur. Ebenso bietet die Erfindung die Möglichkeit, mindestens einem Verdichterfahrzeug durch das Übersenden der erfassten Untergrundtemperatur damit einen einfachen Parameter zur Verfügung zu stellen, basierend auf welchem das Verdichterfahrzeug eine Berechnung der Abkühlung der neu verbauten Asphaltschicht durchführen kann. Folglich kann der Parameter der Untergrundtemperatur neben anderen Parametern, bspw. der Asphalttemperatur, der Asphaltdicke, der Umgebungstemperatur, und/oder der Windstärke von dem Verdichterfahrzeug verwendet werden, um sein Walzschema entsprechend anzugleichen.

Bevorzugterweise kann der Temperatursensor berührungslos die Temperatur des Bereichs des Untergrunds erfassen, was dazu führt, dass der Temperatursensor wenig verschleißt und auch keine Spuren auf dem Untergrund hinterlässt.

Der Temperatursensor kann lösbar am Straßenfertiger befestigt sein. Mittels einer lösbaren Befestigung des Temperatursensors ist es möglich, diesen für Servicezwecke (zum Beispiel zum Reinigen der Optik) bzw. Wartungsarbeiten oder als Diebstahlschutz vom Straßenfertiger abzunehmen. Hinzu kommt auch, dass durch die lösbare Befestigung der Temperatursensor am Straßenfertiger gut nachrüstbar ist.

Vorzugsweise ist der Temperatursensor am Chassis des Straßenfertigers befestigt. Dort kann er besonders stabil über dem Untergrund positioniert werden, wo nur sehr wenige Erschütterungen auf den Temperatursensor wirken. Außerdem bietet die Befestigung des Temperatursensors am Chassis des Straßenfertigers den Vorteil, dass ein sehr kurzer Messweg zum Untergrund vorliegt, wodurch das Messergebnis verbessert werden kann. Alternativ zu einer Befestigung am Chassis ist es natürlich auch vorstellbar, den Temperatursensor an anderen Orten des Straßenfertigers zu befestigen. Vorstellbar wäre es auch, den Temperatursensor mittels einer Halterung vor, neben oder unter dem Straßenfertiger zu positionieren. Dadurch könnte der Sensor einen größeren Bereich des Untergrunds erfassen. Schließlich wäre es auch möglich, den Temperatursensor auf dem Dach des Straßenfertigers zu positionieren, und derart auszurichten, dass er einen Bereich des Untergrunds erfasst, der vor und/oder neben dem Straßenfertiger, jedoch in Fahrtrichtung gesehen vor der Einbaubohle liegt. Eine Positionierung des Temperatursensors auf dem Dach des Straßenfertigers würde verhindern, dass der Temperatursensor vom Untergrund verschmutzt werden könnte. Alternativ könnte der Temperatursensor eine vorbestimmte Optik aufweisen, durch die der Messbereich einstellbar ist.

Ein besonders genaues Messergebnis der Temperatur des Bereichs des Untergrunds lässt sich dann erreichen, wenn der Temperatursensor ein Pyrometer ist. Pyrometer haben darüber hinaus den Vorteil, dass das Messergebnis sofort vorliegt, da der Sensor die Temperaturstrahlung misst und selbst keine thermische Kapazität aufweist, die eine längere Adaption an die zu messende Temperatur notwendig machen würde. Alternativ kann der Temperatursensor ein Infrarotsensor, ein NTC-, oder PTC-Temperatursensor sein. Die Temperatur lässt sich insbesondere dann von einem großen Bereich des Untergrunds erfassen, wenn der Temperatursensor beweglich am Straßenfertiger befestigt ist. Beispielsweise kann der Temperatursensor in einem bestimmten Winkel hin und her bewegt werden bzw. ein kompliziertes Raster abfahren, um den Bereich zu erfassen.

Gemäß der Erfindung umfasst der Straßenfertiger eine Steuereinheit, wobei der Temperatursensor zur Weitergabe der erfassten Temperatur des Bereichs des Untergrunds mit dieser verbunden ist. Die Steuereinheit eignet sich hervorragend zum Auslesen und Verarbeiten der Untergrundtemperatur, die vom Temperatursensor erfasst worden ist. Außerdem ist die Steuereinheit dazu ausgebildet, die Temperaturmessdaten vom Temperatursensor derart zu verarbeiten, dass automatisch eine Anpassung mindestens eines Einbauparameters, bspw. die Leistung der Bohlenheizung, die Tamperdrehzahl, die Kratzerbandgeschwindigkeit, die Verteilerschneckengeschwindigkeit und/oder die Nivellierung der Einbaubohle durchführbar ist. Dadurch lässt sich eine qualitativ hochwertigere Einbauschicht mittels des Straßenfertigers verlegen. Erfindungsgemäß umfasst der Straßenfertiger einen Empfänger mit einer Antenne, der dazu ausgebildet ist, Positionsdaten zu empfangen und an die Steuereinheit weiterzugeben. Dadurch ist es möglich eine genaue Positionierung des Straßenfertigers, insbesondere des Temperatursensors, zu bestimmen. Vorteilhaft ist es auch, wenn der Empfänger als Sendeempfänger ausgebildet ist, um nicht nur Daten zu empfangen, sondern auch Daten zu versenden. Gemäß einer Ausführungsform kann dies über ein Telekommunikationsnetz z.B. eine drahtlose GSM- oder eine Lokale Funkverbindung z.B. Wi-Fi-Schnittstelle geschehen. Besonders gut lassen sich durch den Empfänger Daten empfangen und ggf. versenden, wenn dieser auf dem Dach des Straßenfertigers positioniert ist. Eine Verbindung zwischen dem Empfänger und der Steuereinheit des Straßenfertigers kann bspw. durch einen Rahmen des Bedienstandes verlaufen. Dadurch ist die Verbindung gut geschützt und unauffällig am Straßenfertiger verbaut.

Gemäß der Erfindung ist die Steuereinheit dazu ausgebildet, die erfasste Temperatur des Bereichs des Untergrunds mit den Positionsdaten zu georeferenzieren. Die georeferenzierten Temperaturdaten werden zur Regelung mindestens eines zuvor genannten Einbauparameters verwendet. Die georeferenzierten Temperaturdaten können dem Fertigerfahrer auf einem Display angezeigt werden, sodass er davon abhängig die Einbaufahrt ggf. bei zu kühler Temperatur des Untergrunds abbrechen kann. Vorzugsweise können die georeferenzierten Temperaturdaten an mindestens ein nachfolgendes Verdichterfahrzeug versendet werden, welche darauf basierend ihr Walzschema anpassen können, insbesondere eine Regelung der Verdichtung durchführen. Vorteilhaft ist es auch, wenn die Verbindung zwischen dem Empfänger und der Steuereinheit eine bidirektionale Datenkommunikation zulässt. Dadurch ist es möglich, von der Steuereinheit die Befehlsignale zum Empfänger zu versenden. Erfindungsgemäß ist eine drahtlose Schnittstelle in der Steuereinheit oder im Empfänger vorgesehen, über die die georeferenzierte Temperatur des Bereichs des Untergrunds an mindestens eine externe Einheit, vorzugsweise an mindestens ein Verdichtungsfahrzeug und/oder an eine Zentrale, geschickt werden kann. Dadurch können die georeferenzierten Temperaturdaten auch anderen Teilnehmern, insbesondere vor Ort auf der Baustelle zur Verfügung gestellt werden, die im Falle eines Verdichterfahrzeugs bspw. ein Walzschema damit anpassen bzw. aufstellen können.
Besonders hilfreich ist es auch, den Straßenfertiger der Erfindung mit einer Anzeigeeinheit auszustatten, auf der die erfasste Temperatur des Untergrunds dem Bediener anzeigbar ist. Basierend auf der Anzeige der Temperatur des Bereichs des Untergrunds könnte der Bediener bspw. den Verbau der Einbauschicht auf einer Brücke abbrechen, weil dort die Temperatur des zu asphaltierenden Untergrunds zu gering ist. Bevorzugterweise ist der Straßenfertiger dazu ausgebildet, dem Bediener anzuzeigen, wenn die erfasste Temperatur des Bereichs des Untergrunds eine vorbestimmte Minimaltemperatur erreicht und/oder unterschreitet. Dies könnte bspw. durch Warnsignale geschehen, die dem Bediener durch die Anzeigeeinheit visuell und/oder akustisch darstellbar sind. Dadurch kann verhindert werden, dass der Verbau der Einbauschicht über einem zu kalten Untergrund stattfindet, was insbesondere zu Materialfehlern in der Einbauschicht führen kann. Dabei würde der Asphalt auf dem zu kalten Untergrund zu schnell abkühlen und rasch erhärten, was zur Folge hätte, dass ein nachfolgendes Verdichtungsfahrzeug den neu eingebauten Belag zerstören würde. Dies zeigt sich bspw. durch Risse in der Einbauschicht, die schlimmstenfalls weiter aufbrechen können.
Gemäß einer anderen Ausführungsform der Erfindung ist der Temperatursensor in einem Rohr oder Gehäuse angeordnet. Das Rohr oder Gehäuse bietet einen hervorragenden Schutz und verhindert, dass Untergrundmaterial gegen den Temperatursensor schlägt. Um eine verbesserte Befestigungsmöglichkeit zu schaffen, ist das Rohr oder Gehäuse mit einer Befestigungsplatte verbunden, welche das Rohr oder Gehäuse sowie den darin aufgenommenen Sensor am Straßenfertiger festhält.

Die Erfindung betrifft auch ein Verfahren zum Bestimmen eines Walzschemas eines Verdichterfahrzeuges. Erfindungsgemäß werden von einem Straßenfertiger an das nachfolgende Verdichterfahrzeug georeferenzierte Messdaten einer Temperatur des Untergrunds, auf welchem sich der Straßenfertiger bewegt, versendet. Mindestens auf diesen Messdaten basierend wird für das Verdichterfahrzeug das Walzschema bestimmt, um mit dem Verdichterfahrzeug eine vom vorausfahrenden Straßenfertiger verlegte Einbauschicht zu verdichten. Durch die georeferenzierten Messdaten kann das nachfolgende Verdichterfahrzeug sein Walzschema entsprechend anpassen, indem es spezifische Arbeitsparameter entlang der Verdichterstrecke vorzugsweise automatisch angleicht. Dies bedingt entlang der gesamten Verdichterstrecke ein optimales Arbeitsergebnis in der verbauten Einbauschicht.

Vorzugsweise werden von dem Straßenfertiger an das nachfolgende Verdichterfahrzeug georeferenzierte Messdaten einer Temperatur mindestens eines Bereichs des Untergrunds, der in Fahrtrichtung gesehen vor der Einbaubohle liegt, gesendet. Dies ermöglicht eine flexible Temperaturdatenerfassung des gesamten Bereichs des Untergrunds, über den die Einbaubohle des Straßenfertigers hinterher gezogen wird.

Besonders vorteilhaft ist es, wenn das Erfassen der georeferenzierten Messdaten der Temperatur des Untergrundbereichs an eine Breite der Einbaubohle angepasst werden kann. Dies ist insbesondere dann von Vorteil, wenn die Einbaubohle seitlich ausziehbare Bohlenverbreiterungen umfasst.

Auf dem Untergrund liegende heiße Asphaltmengen, die beispielsweise während der Übergabe durch den LKW verloren gegangen sind, können durch eine entsprechende Signalverarbeitung wirkungsvoll gefiltert werden. Dadurch werden die aufgezeichneten und versendeten Untergrundtemperaturen nicht verfälscht.

Ausführungsbeispiele der Erfindung werden anhand der folgenden Figuren genauer Erläutert. Dabei zeigen
- Figur 1: einen erfindungsgemäßen Straßenfertiger mit einem Temperatursensor zum Erfassen der Untergrundtemperatur,
- Figur 2: eine vergrößerte Darstellung der Einbaustelle des Temperatursensors am erfindungsgemäßen Straßenfertiger und
- Figur 3: eine Temperaturmessvorrichtung gemäß einer Ausführungsform der Erfin-dung.

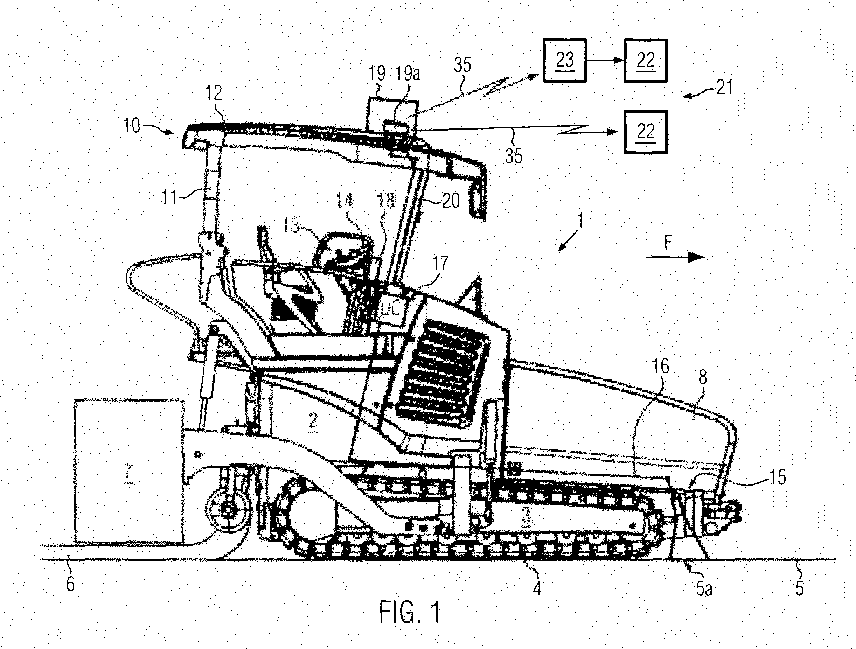

Die Figur 1 zeigt einen Straßenfertiger 1. Der Straßenfertiger 1 umfasst ein Chassis 2 mit einem Fahrwerk 3. Das Fahrwerk 3 ist gemäß der Figur 1 als Raupenfahrwerk ausgebildet, kann jedoch gemäß einer anderen Ausführungsform auch als Radfahrwerk ausgebildet sein. Das Fahrwerk 3 des erfindungsgemäßen Straßenfertigers gemäß der Figur 1 umfasst Raupenketten 4, die sich auf einem Untergrund 5 in Fahrtrichtung F fortbewegen. In der Figur 1 wird auf dem Untergrund 5 eine Einbauschicht 6 vom erfindungsgemäßen Straßenfertiger 1 verlegt. Dazu umfasst der erfindungsgemäße Straßenfertiger 1 eine höhenverstellbare Einbaubohle 7. Mittels der Einbaubohle 7 kann der erfindungsgemäße Straßenfertiger 1 die neu verlegte Einbauschicht 6 einebnen und vorverdichten.

Weiterhin umfasst der Straßenfertiger 1 einen Gutbunker 8, der zur Aufnahme von Einbaugut für die Einbauschicht 6 vorgesehen ist. Vom Gutbunker 8 aus wird das Einbaugut über eine nicht gezeigte Fördervorrichtung nach hinten zu einer Verteilerschnecke 9 geführt. Das Einbaugut wird von der Verteilerschnecke 9 auf den Untergrund 5 verteilt und von der nachfolgenden Einbaubohle 7 verdichtet.

Der Straßenfertiger 1 der Figur 1 umfasst auch einen Bedienstand 10, von welchem aus ein Bediener den Straßenfertiger 1 navigieren kann. Der Bedienstand 10 umfasst einen Trägeraufbau 11, auf dem ein Dach 12 gelagert ist. Das Dach 12 spendet Schatten und hält Regen vom Bediener ab.

Im Bedienstand 10 ist eine Steuerkonsole 13 vorgesehen. Mittels der Steuerkonsole 13 kann der Bediener den Straßenfertiger 1 navigieren. Die Steuerkonsole 13 kann eine Anzeigeeinheit 14, bspw. ein Display, umfassen, um dem Bediener bestimmte Betriebsparameter anzuzeigen. Vorteilhaft ist es, wenn die Anzeigeeinheit 14 ein Farbdisplay umfasst, womit dem Bediener ein Wärmebild des Untergrunds 5 anzeigbar ist.

In Fahrtrichtung F gesehen ist vor dem Fahrwerk 3 ein Temperatursensor 15 am Straßenfertiger 1, insbesondere am Chassis 2 des Straßenfertiger 1, befestigt. Der Temperatursensor 15 ist auf den Untergrund 5 gerichtet, um Temperaturdaten mindestens eines Bereichs des Untergrunds 5 zu erfassen. Insbesondere kann der Temperatursensor 15 derart am Straßenfertiger 1 befestigt sein, dass er Temperaturdaten eines Bereichs vor der Raupenkette 4 erfassen kann. Selbstverständlich können vor beiden Raupenketten 4 des Straßenfertigers 1 jeweils ein oder mehrere Temperatursensoren 15 am Straßenfertiger 1 befestigt sein, um die jeweiligen Bereiche vor den beiden Raupenketten 4 zu erfassen.

Der Temperatursensor 15 der Figur 1 ist funktional über eine Verbindung 16 an eine Steuereinheit 17 gekoppelt. Vorzugsweise kann die Verbindung 16 eine bidirektionale Kommunikation zwischen der Steuereinheit 17 und dem bzw. den Temperatursensoren 15 unterstützen. Dadurch ist es möglich, den bzw. die Temperatursensoren 15 von der Steuereinheit 17 aus zu aktivieren und/oder situationsbedingt anzusteuern, bspw. um den Temperatursensor 15 zu verstellen.

Die Steuereinheit 17 ist mittels einer weiteren Verbindung 18 mit der Steuerkonsole 13 gekoppelt, wobei sich durch die Steuereinheit 17 verarbeitete Daten auf der Anzeigeeinheit 14 der Steuerkonsole 13 anzeigen lassen. Die weitere Verbindung 18 kann ebenfalls für eine bidirektionale Kommunikation ausgebildet sein.

Auf dem Dach 12 des Bedienstandes 10 ist ein Empfänger 19 mit einer Antenne 19a angeordnet. Gemäß einer anderen Ausführungsform der Erfindung kann der Empfänger, insbesondere der GNSS-Empfänger, wie auch ein mit dem Empfänger verbundenes GSM-Modul im Bedienstand angeordnet sein, wobei auf dem Dach ein Antennensystem, welches sowohl eine GNSS-Antenne (z. B. GPS-Antenne) und eine GSN-Antenne umfasst, angeordnet ist. Der Empfänger 19 ist vorzugsweise ein GNSS-Empfänger, bspw. ein GPS-Empfänger, der zum Erfassen eines Raumbezuges für die erfassten Temperaturdaten des Bereichs des Untergrunds 5 ausgebildet ist. Der Empfänger 19 ist in Fahrtrichtung F gesehen vorne auf dem Dach des Straßenfertigers 1 befestigt, wo er nicht durch Hitzestrahlung der Einbauschicht 6 gestört wird, und ist über ein Kabel 20 mit der Steuereinheit 17 verbunden. Vorzugsweise ist der Empfänger 19 als Sendeempfänger ausgebildet, und ist neben dem Empfang von GNSS/GPS-Daten auch zum Versenden von georeferenzierten Temperaturdaten des erfassten Untergrundbereichs ausgebildet. Allerdings kann auch zusätzlich zum Empfänger 19 eine separate drahtlose Übertragungseinheit vorgesehen sein, um die georeferenzierten Temperaturdaten des Untergrundbereichs zu versenden.

Wenn der Straßenfertiger 1 über den Untergrund 5 in Fahrtrichtung F zum Verbau der Einbauschicht 6 fährt, kann der Bediener den Temperatursensor 15 vom Bedienstand 10 aus über die Steuerkonsole 13 aktivieren und ansteuern, sodass dieser mindestens von einem Bereich des Untergrunds 5 die Temperatur erfasst. Die erfassten Temperaturdaten des Untergrunds 5 werden über die Verbindung 16 an die Steuereinheit 17 weitergeleitet, welche dazu ausgebildet ist, die Temperaturdaten mit den Positionsdaten des Empfängers 19 zu georeferenzieren. Die daraus resultierenden positionsbezogenen Temperaturdaten des Untergrunds 5 sind vorzugsweise in Echtzeit auf der Anzeigeeinheit 14 der Steuerkonsole 13 dem Bediener anzeigbar. Dabei können die Temperaturdaten des Untergrunds 5 durch die Anzeige zusätzlicher Wärmebilddaten, welche durch eine weitere Messvorrichtung (nicht gezeigt) vom frisch verbauten Asphalt generiert werden, auf der Anzeigeeinheit 14 ergänzt werden, sodass dem Fertigerfahrer sowohl Temperaturdaten über den Untergrund 5 als auch Temperaturdaten über die neu verbaute Asphaltschicht vorliegen. Darauf basierend kann der Bediener entweder selbst oder mittels eines Automatikbetriebs die Anpassung bestimmter Einbauparameter des Straßenfertigers 1 anpassen.

Die Untergrundtemperatur kann vom Straßenfertiger 1 aus an externe Einheiten 21, insbesondere an ein oder mehrere Verdichterfahrzeuge 22 und/oder einen Server 23 versendet werden. Der Server 23 kann das Verdichterfahrzeug bzw. die Verdichterfahrzeuge 22 über die von ihm empfangenen georeferenzierten Temperaturdaten des Straßenfertigers 1 benachrichtigen.

Durch den Empfang der georeferenzierten Temperaturdaten des Straßenfertigers 1 kann das nachfolgende Verdichterfahrzeug ein 22 Walzschema bestimmen, bzw. neu ausrichten. Dabei können vom Verdichterfahrzeug 22 selbst bestimmte Verdichtungsparameter an die vom Straßenfertiger 1 aus versendeten georeferenzierten Temperaturdaten des Untergrundbereichs angepasst werden.

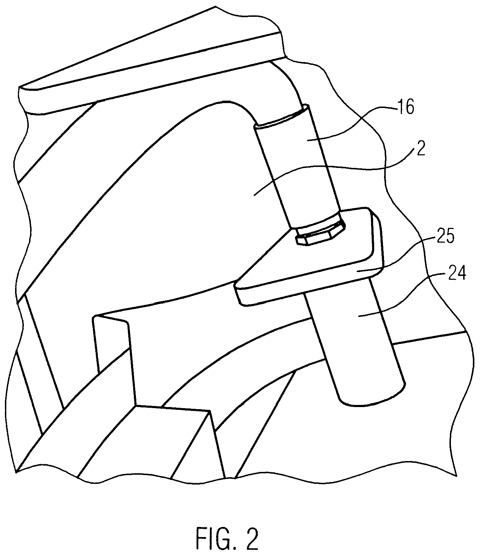

Die Figur 2 zeigt den Ort des Verbaus des Temperatursensors 15 am Straßenfertiger 1 in vergrößerter Darstellung. Der Temperatursensor 15, z. B. ein Pyrometer, ist dabei in einem Rohr 24 angeordnet, welches den Temperatursensor 15 schützt. Das Rohr 24 schützt den Temperatursensor 15 insbesondere vor Feuchtigkeit und losem Untergrundmaterial. Das Rohr 24 ist auf einer Platte 25 befestigt. Die Platte 25 ist am Straßenfertiger 1 derart befestigt, dass sie das Rohr 24 entsprechend zum Untergrund 5 hin ausrichtet.

Von der zum Rohr 24 abgewandten Seite der Platte 25 läuft die Verbindung 16 weg, die den Temperatursensor 15 funktional mit der Steuereinheit 17 koppelt.

Bei der Platte 25 ist es vorstellbar, dass diese fest ans Chassis 2 des Straßenfertigers 1 angeschweißt ist, um dem Rohr 24 eine Ausrichthilfe zur Verfügung zu stellen. Das Rohr 24 und/oder die Verbindung 16 können lösbar an der Platte 25 befestigt sein, wodurch Instandsetzung und Servicearbeiten besser am Temperatursensor 15 durchführbar sind. Insbesondere kann das Rohr 24, der in der Figur 2 nicht dargestellte Temperatursensor 15 und/oder die Verbindung 16 an der Platte 25 angeschraubt befestigt sein.

Dadurch, dass der Temperatursensor 15 in Fahrtrichtung F gesehen vor dem Fahrwerk 3 des Straßenfertigers 1 positioniert ist, ist er keiner großen Hitzebelastung ausgesetzt. Dies wird begünstigt, wenn die Gutbunkerwände des Gutbunkers 8 gut isoliert sind. Im Gegensatz dazu hätte eine Befestigung des Temperatursensors 15 an bzw. in der Nähe der Einbaubohle 7 eine hohe Hitzebeanspruchung desselben zur Folge. Dies würde einen erhöhten Wartungsbedarf zur Folge haben und besondere, vor allem kostspielige Anforderungen an den Verbau des Temperatursensors 15 sowie an ihn selbst stellen.

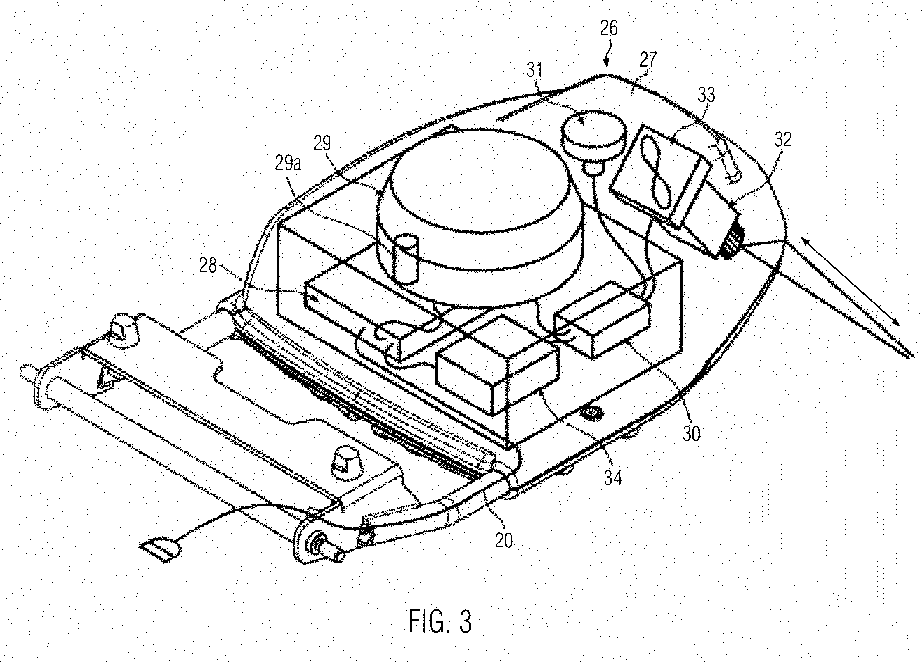

Die Figur 3 zeigt eine Messvorrichtung 26, die anstelle des Temperatursensors 15 derart am Straßenfertiger 1 befestigbar ist, dass sie zur Wärmebilderfassung mindestens eines Bereichs des Untergrunds 5 verwendet werden kann. Insbesondere könnte die Messvorrichtung 26 in Fahrtrichtung F gesehen vorne auf dem Dach 12 des Straßenfertigers 1 angeordnet werden, um ein Wärmebild des Untergrunds vor und/oder neben dem Straßenfertiger 1, jedoch vor der Einbauschicht 6 zu erfassen.

Die Messvorrichtung 26 bildet ein kompaktes Modul zum Erfassen und Versenden von georeferenzierten Temperaturdaten des Untergrundbereichs. Dazu umfasst die Messvorrichtung 26 ein Gehäuse 27, in welchem sämtliche Komponenten zum Erfassen und Versenden von georeferenzierten Temperaturdaten angeordnet sind. Insbesondere sind im Gehäuse 27 der Messvorrichtung 26 ein Rechner zur Temperaturverarbeitung 28, ein GPS-Empfänger mit Antenne 29, eine RTK-Radioeinheit 30, die mit einer RTK-Antenne 31 verbunden ist, eine Infrarotkamera 32 zur Aufzeichnung des Wärmebilds des Untergrundbereichs, ein Gebläse 33 sowie eine Stromversorgung 34 angeordnet. Die oben bezeichneten Komponenten der Messvorrichtung 26 sind so miteinander funktional verbunden, dass sie ein georeferenziertes Wärmebild des Untergrundbereichs herstellen können, welches mittels eines Datenkabels 35 an die Steuerkonsole 13 des Straßenfertigers 1 kommunizierbar ist. Ebenfalls lassen sich die georeferenzierten Wärmebilddaten mittels der Messvorrichtung 26, insbesondere mittels einer drahtlosen Schnittstelle des Rechners 28, an die externen Einheiten 21 versenden, um wie es oben beschrieben wurde von diesen vorteilhaft zur Arbeitsparameterbestimmung verwendet zu werden.

Gemäß der Erfindung kann die Temperaturerfassung des Untergrunds 5 bzw. die Temperaturerfassung mindestens eines Bereichs des Untergrunds 5, auf welchem der Straßenfertiger 1 während des Verbaus der Einbauschicht 6 fährt, hervorragend zur Anpassung bestimmter Einbauparameter des Straßenfertigers 1 und/oder zur Anpassung bestimmter Verdichtungsparameter mindestens eines dem Straßenfertiger 1 nachfolgenden Verdichterfahrzeugs 22 verwendet werden. Dabei ist es insbesondere vorteilhaft, dass sich die Untergrundtemperatur des Untergrunds 5, auf welchem noch keine Einbauschicht 6 vom Straßenfertiger verlegt worden ist, einfach erfasst werden kann und dazu, im Vergleich zu anderen bekannten Temperaturmesssystemen, einfache, leicht wartbare Mittel gemäß der Erfindung zum Einsatz kommen können. Ebenfalls besteht keine Gefahr bei der Erfindung, dass die zur Untergrundtemperaturaufzeichnung benötigten Mittelt mit anderen Messsystemen in Konflikt geraten, wodurch sich insbesondere die Einbauqualität der Einbauschicht 6 verbessern, sowie die Bedienbarkeit des Straßenfertigers 1 vereinfachen lässt.

Gemäß der vorigen Beschreibung sind sämtliche Komponenten zur Temperatur- und Positionsdatenerfassung am Straßenfertiger 1 befestigt. Vorstellbar wäre es auch, dass ein Teil oder sämtliche Komponenten zur Herstellung der georeferenzierten Temperaturdaten von einem oder mehreren separaten Gefährten getragen werden, wie bspw. einer Drohne, die vor der neu eingebauten Einbauschicht 6 neben und/oder vor dem Straßenfertiger 1 in dessen Nähe zur Wärmebildaufzeichnung des Untergrunds 5 fährt. Diese könnte bspw. mittels einer Distanzregelung relativ zum Straßenfertiger 1 auf dem Untergrund 5 vor der Einbauschicht 6 fahren und vom Straßenfertiger 1 aus gesteuert werden.

## Patentansprüche

1. Straßenfertiger (1), umfassend eine Einbaubohle (7) zum Verlegen einer Einbauschicht (6) auf einem Untergrund (5) sowie mindestens einen Temperatursensor (15), der derart am Straßenfertiger (1) befestigt und auf den Untergrund (5) ausgerichtet ist, dass er eine Temperatur mindestens eines Bereichs (5a) des Untergrunds (5) erfassen kann, der in Fahrtrichtung (F) gesehen vor der Einbaubohle (6) liegt, wobei der Straßenfertiger (1) eine Steuereinheit (17) umfasst, wobei der Temperatursensor (15) zur Weitergabe der erfassten Temperatur des Bereichs des Untergrunds (5) mit dieser Steuereinheit (17) verbunden ist, wobei
der Straßenfertiger (1) einen Empfänger (19) mit einer Antenne (19a) umfasst, der dazu ausgebildet ist, Positionsdaten zu empfangen und an die Steuereinheit (17) weiterzugeben, wobei die Steuereinheit (17) dazu ausgebildet ist, die erfasste Temperatur des Bereichs des Untergrunds (5) mit den Positionsdaten zu georeferenzieren, und wobei der Straßenfertiger (1) mindestens eine drahtlose Schnittstelle (35) zum Versenden der georeferenzierten Temperatur des Bereichs des Untergrunds (5) an mindestens eine externe Einheit (21), vorzugsweise an mindestens ein Verdichterfahrzeug (22) und/oder an eine Zentrale umfasst, **dadurch gekennzeichnet, dass** die Steuereinheit (17) dazu ausgebildet ist, anhand der georeferenzierten Temperaturdaten des Bereichs des Untergrunds (5) eine automatische Anpassung mindestens eines Einbauparameters des Straßenfertigers (1) durchzuführen.

2. Straßenfertiger nach Anspruch 1, **dadurch gekennzeichnet, dass** der mindestens eine Temperatursensor (15) berührungslos die Temperatur des Bereichs (5a) des Untergrunds (5) erfassen kann.

3. Straßenfertiger nach einem der vorigen Ansprüche, **dadurch gekennzeichnet, dass** der Temperatursensor (15) lösbar am Straßenfertiger (1) befestigt ist.

4. Straßenfertiger nach einem der vorigen Ansprüche, **dadurch gekennzeichnet, dass** der Temperatursensor (15) am Chassis (2) des Straßenfertigers (1) befestigt ist.

5. Straßenfertiger nach einem der vorigen Ansprüche, **dadurch gekennzeichnet, dass** der Temperatursensor (15) ein Pyrometer, ein Infrarotsensor, ein NTC-Temperatursensor oder ein PTC-Temperatursensor ist.

6. Straßenfertiger nach einem der vorigen Ansprüche, **dadurch gekennzeichnet, dass** der Temperatursensor (15) beweglich am Straßenfertiger (1) befestigt ist.

7. Straßenfertiger nach einem der vorigen Ansprüche, **dadurch gekennzeichnet, dass** die erfasste Temperatur des Bereichs des Untergrunds (5) auf einer Anzeigeeinheit (14) des Straßenfertigers (1) dem Bediener anzeigbar ist.

8. Straßenfertiger nach einem der vorigen Ansprüche, **dadurch gekennzeichnet, dass** der Straßenfertiger (1) dazu ausgebildet ist, dem Bediener anzuzeigen, wenn die erfasste Temperatur des Bereichs des Untergrunds (5) eine vorbestimmte Minimaltemperatur erreicht und/oder unterschreitet.

9. Straßenfertiger nach einem der vorigen Ansprüche, **dadurch gekennzeichnet, dass** der Temperatursensor (15) in einem Rohr (24) angeordnet ist.

10. Straßenfertiger nach einem der vorigen Ansprüche, **dadurch gekennzeichne**t, dass der Einbauparameter eine Leistung einer Bohlenheizung, eine Tamperdrehzahl, eine Kratzerbandgeschwindigkeit, eine Verteilerschneckengeschwindigkeit und/oder eine Nivellierung der Einbaubohle (6) ist.

11. Verfahren zum Bestimmen eines Walzschemas eines Verdichterfahrzeuges (22), wobei von einem Straßenfertiger (1) an das nachfolgende Verdichterfahrzeug (22) georeferenzierte Messdaten einer Temperatur des Untergrunds (5), auf welchem sich der Straßenfertiger (1) bewegt, versendet werden und mindestens auf diesen Messdaten basierend für das Verdichterfahrzeug (22) ein Walzschema bestimmt wird, um mit dem Verdichterfahrzeug (22) eine vom vorausfahrenden Straßenfertiger (1) verlegte Einbauschicht (6) zu verdichten, **dadurch gekennzeichnet, dass** eine Steuereinheit (17) des Straßenfertigers (1) anhand der georeferenzierten Messdaten der Temperatur des Untergrunds (5) mindestens einen Einbauparameter des Straßenfertigers (1) automatisch anpasst.

12. Verfahren nach Anspruch 11, wobei von dem Straßenfertiger (1) an das nachfolgende Verdichterfahrzeug (22) georeferenzierte Messdaten einer Temperatur mindestens eines Bereichs des Untergrunds (5), der in Fahrtrichtung (F) gesehen vor der Einbaubohle (7) liegt, versendet werden.

13. Verfahren nach Anspruch 11 oder 12, wobei die Steuereinheit (17) als Einbauparameter automatisch eine Leistung einer Bohlenheizung, eine Tamperdrehzahl, eine Kratzerbandgeschwindigkeit, eine Verteilerschneckengeschwindigkeit und/oder eine Nivellierung der Einbaubohle (6) anpasst.

## Claims

1. Road finishing machine (1), comprising a screed (7) for laying a paving layer (6) on a subsoil (5) and at least one temperature sensor (15) which is fixed to the road finishing machine (1) and directed to the subsoil (5) such that it may detect a temperature of at least a region (5a) of the subsoil (5) which is located in front of the screed (6), seen in the direction of travel (F), said road finishing machine (1) comprises a control unit (17), the temperature sensor (15) being connected to said control unit (17) for forwarding the detected temperature of the region of the subsoil (5), said road finishing machine (1) comprises a receiver (19) with an antenna (19a) which is embodied to receive positional data and forward them to the control unit (17), said control unit (17) is embodied to georeference the detected temperature of the region of the subsoil (5) with the positional data, said road finishing machine (1) comprises at least one wireless interface (35) via which the georeferenced temperature of the region of the subsoil (5) may be sent to at least one external unit (21), preferably to at least one compacting vehicle (22), and/or to a central unit,
**characterized in that**
the control unit (17) is configured to automatically adjust at least one paving parameter of the road finishing machine (1) based on the georeferenced temperature of the region of the subsoil (5).

2. Road finishing machine according to claim 1, **characterized in that** said at least one temperature sensor (15) may detect the temperature of the region (5a) of the subsoil (5) without contacting it.

3. Road finishing machine according to one of the preceding claims, **characterized in that** said temperature sensor (15) is releasably mounted to the road finishing machine (1).

4. Road finishing machine according to one of the preceding claims, **characterized in that** said temperature sensor (15) is mounted to the chassis (2) of the road finishing machine (1).

5. Road finishing machine according to one of the preceding claims, **characterized in that** said temperature sensor (15) is a pyrometer, an infrared sensor, an NTC temperature sensor or a PTC temperature sensor.

6. Road finishing machine according to one of the preceding claims, **characterized in that** said temperature sensor (15) is movably mounted to the road finishing machine (1).

7. Road finishing machine according to one of the preceding claims, **characterized in that** the detected temperature of the region of the subsoil (5) may be displayed to the operator on a display unit (14) of the road finishing machine (1).

8. Road finishing machine according to one of the preceding claims, **characterized in that** said road finishing machine (1) is embodied to display to the operator when the detected temperature of the region of the subsoil (5) reaches and/or falls below a predetermined minimum temperature.

9. Road finishing machine according to one of the preceding claims, **characterized in that** said temperature sensor (15) is disposed in a tube (24).

10. Road finishing machine according to one of the preceding claims, **characterized in that** the paving parameter is a power of a screed heating, a tamper speed, a scraper belt speed, a spreading screw speed and/or a leveling of the screed (7).

11. Method for determining a rolling pattern of a compacting vehicle (22), wherein a road finishing machine (1) transmits georeferenced measured data of a temperature of the subsoil (5) on which the road finishing machine (1) is moving to the following compacting vehicle (22), and a rolling pattern for the compacting vehicle (22) is determined based at least on said measuring data to compact a paving layer (6) laid by the preceding road finishing machine (1) with the compacting vehicle (22), **characterized in that** a control unit (17) of the road finishing machine (1) automatically adjusts at least one paving parameter of the road finishing machine (1) based on the georeferenced measured data of the temperature of the subsoil (5).

12. Method according to claim 11, wherein the road finishing machine (1) transmits georeferenced measured data of a temperature of at least a region of the subsoil (5) which is located in front of the screed (7), seen in the direction of travel (F), to the following compacting vehicle (22).

13. Method according to claim 11 or 12, wherein the control unit (17) automatically adjusts a power of a screed heating, a tamper speed, a scraper belt speed, a spreading screw speed and/or a leveling of the screed (7) as the paving parameter.

## Revendications

1. Finisseur de route (1) comprenant une table de pose de revêtement (7) pour la pose d'une couche de revêtement ou d'enrobé (6) sur un sol de base (5), ainsi qu'au moins un capteur de température (15) fixé sur le finisseur de route (1) et orienté vers le sol de base (5) de manière à être en mesure de relever une température d'au moins une zone (5a) du sol de base (5), qui, vue dans la direction de marche (F), se situe devant la table de pose de revêtement (7), le finisseur de route (1) comprenant également une unité de commande (17) et le capteur de température (15) étant relié à cette unité de commande (17) pour lui transmettre la température relevée de ladite zone du sol de base (5), le finisseur de route (1) comprenant également un récepteur (19) avec une antenne (19a), qui est configuré pour assurer la réception de données de position et leur transmission à l'unité de commande (17), l'unité de commande (17) étant conçue pour géoréférencer la température relevée de ladite zone du sol de base (5) avec les données de position, et le finisseur de route (1) comprenant par ailleurs au moins une interface sans fil (35) pour l'émission de la température géoréférencée de ladite zone du sol de base (5) vers au moins une unité externe (21), de préférence vers un véhicule de compactage (22) et/ou vers une centrale,
**caractérisé en ce que** l'unité de commande (17) est configurée pour effectuer, au regard des données de température géoréférencées de ladite zone du sol de base (5), une adaptation automatique d'au moins un paramètre de pose de revêtement du finisseur de route (1).

2. Finisseur de route selon la revendication 1,
**caractérisé en ce que** ledit au moins un capteur de température (15) est en mesure d'assurer un relevé sans contact de la température de ladite zone (5a) du sol de base (5).

3. Finisseur de route selon l'une des revendications précédentes, **caractérisé en ce que** le capteur de température (15) est fixé de manière amovible sur le finisseur de route (1).

4. Finisseur de route selon l'une des revendications précédentes, **caractérisé en ce que** le capteur de température (15) est fixé sur le châssis (2) du finisseur de route (1).

5. Finisseur de route selon l'une des revendications précédentes, **caractérisé en ce que** le capteur de température (15) est un pyromètre, un détecteur infrarouge, un capteur de température NTC (à coefficient de température négatif) ou un capteur de température PTC (à coefficient de température positif).

6. Finisseur de route selon l'une des revendications précédentes, **caractérisé en ce que** le capteur de température (15) est fixé de manière mobile sur le finisseur de route (1).

7. Finisseur de route selon l'une des revendications précédentes, **caractérisé en ce que** la température relevée de ladite zone du sol de base (5) peut être indiquée à l'opérateur sur une unité de visualisation (14) du finisseur de route (1).

8. Finisseur de route selon l'une des revendications précédentes, **caractérisé en ce que** le finisseur de route (1) est configuré pour indiquer à l'opérateur à quel moment la température relevée de ladite zone du sol de base (5) atteint une température minimale prédéterminée et/ou passe en-dessous de celle-ci.

9. Finisseur de route selon l'une des revendications précédentes, **caractérisé en ce que** le capteur de température (15) est agencé dans un tube (24).

10. Finisseur de route selon l'une des revendications précédentes, **caractérisé en ce que** le paramètre de pose de revêtement est une puissance d'un dispositif de chauffe de la table de pose de revêtement, une vitesse de rotation de damage, une vitesse de bande à racleurs, une vitesse de vis sans fin de répartition et/ou un nivelage de la table de pose de revêtement (7).

11. Procédé pour déterminer un schéma de compactage d'un véhicule de compactage (22), d'après lequel un finisseur de route (1) transmet au véhicule de compactage (22) qui le suit, des données de mesure géoréférencées d'une température du sol de base (5) sur lequel se déplace le finisseur de route (1), et un schéma de compactage est déterminé pour le véhicule de compactage (22) en se basant au moins sur ces données de mesure, en vue de compacter avec le véhicule de compactage (22), une couche de revêtement (6) posée par le finisseur de route (1) précédant le véhicule de compactage, **caractérisé en ce qu'**une unité de commande (17) du finisseur de route (1) adapte automatiquement au moins un paramètre de pose du finisseur de route (1), au regard des données de mesure géoréférencées de la température du sol de base (5).

12. Procédé selon la revendication 11, d'après lequel le finisseur de route (1) transmet au véhicule de compactage (22) qui le suit, des données de mesure géoréférencées d'une température d'au moins une zone du sol de base (5), qui, vue dans la direction de marche (F), se situe devant la table de pose de revêtement (7).

13. Procédé selon la revendication 11 ou la revendication 12, d'après lequel l'unité de commande (17) adapte automatiquement, en guise de paramètre de pose, une puissance d'un dispositif de chauffe de la table de pose de revêtement, une vitesse de rotation de damage, une vitesse de bande à racleurs, une vitesse de vis sans fin de répartition et/ou un nivelage de la table de pose de revêtement (7).
